Europäisches Patentamt

European Patent Office

Office européen des brevets

(11) Publication number: **0 199 395**
**B1**

# EUROPEAN PATENT SPECIFICATION

(45) Date of publication of the patent specification:
06.06.90

(51) Int. Cl.⁵: **E04C 3/04, E04C 3/08, E04C 3/32**

(21) Application number: **86200511.3**

(22) Date of filing: **27.03.86**

(54) Structure for metal constructions in general, in particular for trestlework constructions, accomplished by means of section bars and jointing elements.

(30) Priority: **05.04.85 IT 2027085**

(43) Date of publication of application:
**29.10.86 Bulletin 86/44**

(45) Publication of the grant of the patent:
**06.06.90 Bulletin 90/23**

(84) Designated Contracting States:
**AT BE CH DE FR GB LI LU NL SE**

(56) References cited:
**EP-A- 0 023 373**
**EP-A- 0 039 141**
**DE-A- 2 654 239**
**DE-C- 608 535**
**FR-A- 1 345 121**
**NL-A- 6 505 731**
**US-A- 2 731 116**
**US-A- 3 110 535**

(73) Proprietor: **Pantalone, Antonio, Via Carpaccio, 4,
I-20133 Milano(IT)**

(72) Inventor: **Pantalone, Antonio, Via Carpaccio, 4,
I-20133 Milano(IT)**

(74) Representative: **De Carli, Erberto et al, ING. BARZANO'
& ZANARDO MILANO S.p.A. Via Borgonuovo, 10,
I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The object of the present invention is a structure for metal constructions in general, in particular for trestlework constructions, accomplished by means of section bars and jointing elements.

It is known from the art of metal constructions that, in a correctly designed and executed joint, between stringers and section bars in general, or between stringers and wall rods (braces, uprights or crosspieces) in trestlework constructions, the barycentric axes or the tracing (drilling) axes in bolted joints must coincide, i.e., those of the wall rods must converge on the barycentric axis of the stringer to which they are fastened.

This condition however is not sufficient to insure that the jointing point or knot and the elements converging in it are not stressed by non-negligible and hence undesired flexural and secondary actions.

For the joint to be properly accomplished, it is moreover necessary that the element jointing the stringers and the section bars, or the wall rods and the stringer, be fastened to the same stringer by means of bolts, rivets or welding beads positioned along a line coincident with the barycentric axis of the stringer, or on two lines parallel to the barycentric axis of the stringer, and lying on a plane passing through the barycentric axis, but not on the same side of the barycentric axis.

In EP-A 0 023 373 a structure for metal constructions in general, in particular for trestlework constructions, accomplished by means of section bars and jointing elements is disclosed, in which a special section bar is used which offers several advantages over other section bars known from the prior art, such as angle irons, H-beams, channels, and so forth. In particular, the known structure comprises at least one angle iron having equal legs, each of which legs is extended at its free end with a first extension length positioned at right angle relative to the related leg in the same direction as the other leg, and with a second extension length positioned at right angle relative to the first extension length in such a direction as to depart from the other leg, with said first and second extension lengths having each one a width equal to half the width of a leg of the angle iron. This section bar allows an easy fastening of the jointing elements for wall rods with perfect symmetry between the two sides, has a large inertial radius and can hence have a reduced weight, and allows the action lines of the forces acting through the jointing elements fastening the wall rods to the stringer to converge and cross each other on the barycentric axis of the section bar.

These jointing elements joining the known section bars and the wall rods are indicated in the aforesaid patent as plates, angle slabs or the like, to be fastened by means of bolts, rivets or welding beads to said second extension lengths of the legs of the angle iron. In this way, the action lines of the forces acting through these connections on the section bar converge and cross each other on the barycentric axis of the section bar.

However, as it has been said, in this case too, this is not enough to prevent parasitic flexural moments and other local actions being induced in the section bar, which can deform the cross section shape of the same section bar, increasing the danger of local and overall instability of the structure, and hence rendering the section bar not perfectly suited to the structural uses.

Purpose of the present invention is hence to provide a structure for metal constructions in general, in particular for trestlework constructions, accomplished by means of section bars and jointing elements which, while maintaining the advantages of the section bar of the above mentioned EP-A 0 023 373 allows a correct connection of said section bars with each other, and of the section bars with the wall rods, without inducing in the section bar a parasite flexural moment and other local actions which can deform the cross section shape of the same section bar.

In order to achieve this purpose, according to the present invention, the proposed structure is characterized in that said jointing element is constituted by at least one plate suitable to be fastened to said angle iron at the inner surface of one of its legs and at the inner surface of the second extension length of the other leg.

A so constructed structure allows connecting in a correct way the section bars with each other, or connecting with the section bars wall rods on a plane parallel to the planes of said other leg of the angle iron and of the related second extension length.

In the simplest form of practical embodiment of such a structure, the jointing element is constituted by one plate only, suitable to be butt-fastened to the inner surface of one leg of the angle iron, and suitable to be fastened, under plane contact, to the inner surface of the second extension length of the other leg of the angle iron.

Instead of a single plate, as the jointing element an element can be used, in which said one plate ends, at one of its ends, with a second perpendicular plate, so as to form a T-shaped element, wherein said second plate is suitable to be fastened, under plane contact, to the inner suface of said one leg of the angle iron.

Other embodiments of the structure according to the present invention are defined in claims 6 to 19.

The structure provided according to the present invention allows fulfillment of the conditions necessary for the correct transmission of the forces in the connection points of section bars or stringers and from the wall rods (braces, uprights and crosspieces) to the section bar or stringer, without undesired effects due to parasite flexural moments. Moreover, as the connection between stringers and wall rods occurs through an element distinct from both the stringer and the wall rod, an indirect connection is achieved, with the consequent further advantage that each element converging in the knot bears only the actions competing to it, in that it is the jointing element which receives the actions exerted by the various rods, and discharges them correctly.

In case an angle iron having equal legs is used as section bar, wherein the said first and the second extension lengths have each one a width exactly equal to half the width of a leg of the angle iron, the plate(s) of the jointing element intended for being fastened to the inner surfaces of the second extension length(s) of the legs of the angle iron are not precisely centred on the centre of gravity of the same section bar, remaining off-centred relatively to it by a distance equal to the sum formed by the half the thickness of the second extension lengths of the legs of the angle iron and by half the thickness of the plates of the jointing element destined to be fastened to the inner surfaces of the said second extension lengths.

To the purpose of obtaining a perfect centering, according up to the present invention it is furthermore proposed to slightly modify the widths of the first and of the second extension lengths of the legs of the angle iron, but leaving unchanged the position of its barycentre.

In this case, the first extension lengths of the two legs of the angle iron have each a width equal to half the width of a leg of the angle iron, lessened by a value corresponding to the sum formed by half the thickness of the second extension lengths of the legs of the angle iron and by half the thickness of the plate of the jointing element destined to be fastened to the inner surface of said second extension length, of the leg of the angle iron. Further, the second extension lengths of the legs of the angle iron have each a width equal to the half width of a leg of the angle iron, increased by the value of the said sum.

In this way, not only the plate(s) of the jointing element can be fastened to the inner surfaces of the second extension length(s) of the legs of the angle iron, so that the forces transmitted by the wall rods connected to said plate(s) pass through the barycentric axis of the section bar, but the position of the barycentre of the section bar remains unchanged relatively to the position of the barycentre of an angle iron, wherein the first and second extension lengths of the two legs of the angle iron have a width equal to half the width of a leg.

It appears clear, in any case, that also with the non-modified section bar, and by using a jointing element as provided in the structure according to the present invention, considerable advantages are achieved as compared to the situation wherein traditional jointing elements are used, because the off-centering distance of the plate(s) of the jointing element from the centre of gravity of the section bar remains in any case very small, so as not to induce appreciable negative consequences.

In the following, the invention shall be disclosed in greater detail with reference to the attached drawings showing various forms of practical embodiment exemplifying and not limitative of the same invention, and namely

Figs. 1–1a show in respectively front view and side view a first form of practical embodiment of a structure with a stringer and diagonal wall rods lying on one plane only,

Figs. 2–2a and 3–3a are analogue views of two constructional variants of the structure as of figs. 1–1a,

Figs. 4–4a are analogue views of a structure with a stringer and diagonal wall rods on two perpendicular planes;

Figs. 5–5a, 6–6a, 7–7a, 8–8a and 9–9a are views of constructional variants of the structure as of figs. 4–4a;

Figs. 10–10a and 11–11a show further constructional variants of the structure of figs. 4–4a;

Figs. 12–12a show another form of practical embodiment of a structure with a stringer to which elements lying on a plane inclined by 45° relatively to the legs of the angle iron are connected;

Figs. 13–13a show a structure wherein to a stringer, besides wall rods lying on two perpendicular planes being connected to it, a further section bar is butt-jointed;

Figs. 14–14a show the connection of two equal section bars with each other;

Fig. 15 shows in front view a structure comprising a modified section bar and a jointing element for jointing wall rods lying on two perpendicular planes, and

Fig. 16 shows, in a view similar to Fig. 15, another type of modified section bar.

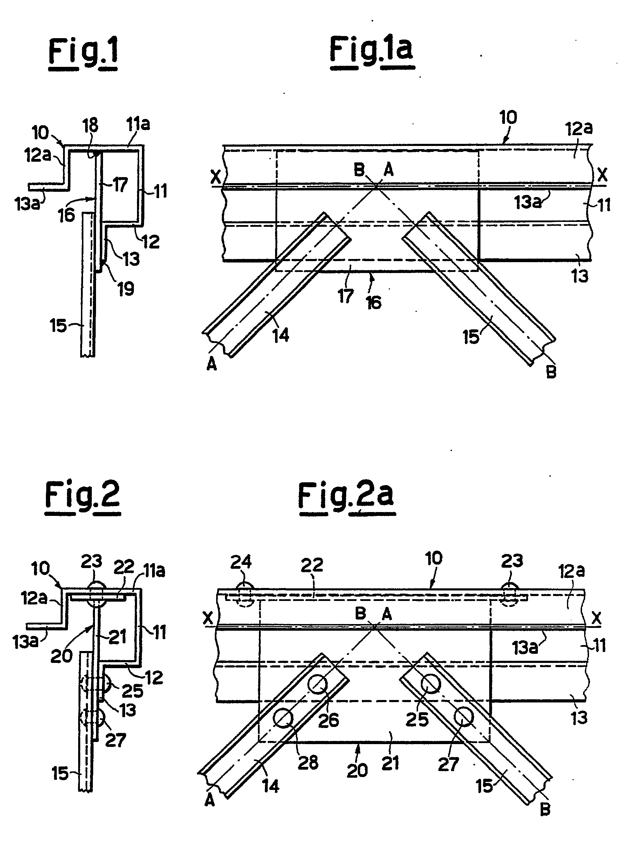

Referring first to Figs. 1–1a, in them a structure is shown, which comprises an angle iron, generally indicated with 10, and a jointing element, generally indicated with 16.

The angle iron 10 has two legs 11 and 11a of equal width, and each of these legs is extended at its free end with a first extension length 12 and respectively 12a, and with a second extension length 13 and respectively 13a. The first extension lengths 12 and 12a are perpendicular to their respective legs 11, 11a of the angle iron 10 and are positioned in the same direction as the other respective leg 11a, 11 of the angle iron. The second extension lengths 13 and 13a are perpendicular to their respective first extension lengths 12 and 12a and are positioned in such directions as to depart from the respective other leg 11a, 11 of the angle iron 10. Each of said first and second extension lengths 12, 12a and 13, 13a of the angle iron 10 has a width equal to half width of a leg 11 or 11a of the same angle iron.

The jointing element 16 is constituted, in this simplest form of embodiment, by a single plate 17 butt-welded in 18 to the inner surface of the leg 11a of the angle iron 10, and abutting against the inner surface of the second extension length 13 of the other leg 11 of the angle iron, to which length 13 it is welded by means of a welding bead 19.

The jointing element 16 can be used to connect to the angle iron or stringer 10 two elements 14, 15, suitably fastened, e.g., also welded, to the jointing element 16 and so inclined that their barycentric axes A–A and respectively B–B cross each other on the barycentric axis X–X of the angle iron 10 (see fig. 1a).

Another form of embodiment of the structure, wherein always the same angle iron 10 as shown in Fig. 1–1a can be used, is shown in fig. 2–2a, and comprises a T-shaped jointing element 20, having one plate 21 with which a second plate 22 perpendicular to it is butt-jointed, e.g., by butt-welding. In this case, the second plate 22 is fastened to the inner surface of the leg 11a of the angle iron 10, e.g., by two rivets or bolts 23, 24 lined-up on the centre-plane of the plate 21, and the plate 21 is fastened to the inner surface of the second extension length 13 of the leg 11 of the angle iron 10 by means of a coupled of rivets or bolts 25, 26. To the plate 21 of the T-shaped jointing element 20, which plate suitably protrudes beyond the second extension length 13 of the angle iron 10, the elements 14 and 15 are fastened by means of the same rivets or bolts 25, 26 and further rivets 27, 28, so that their barycentric axes A–A and B–B converge on the barycentric axis X–X of the angle iron 10.

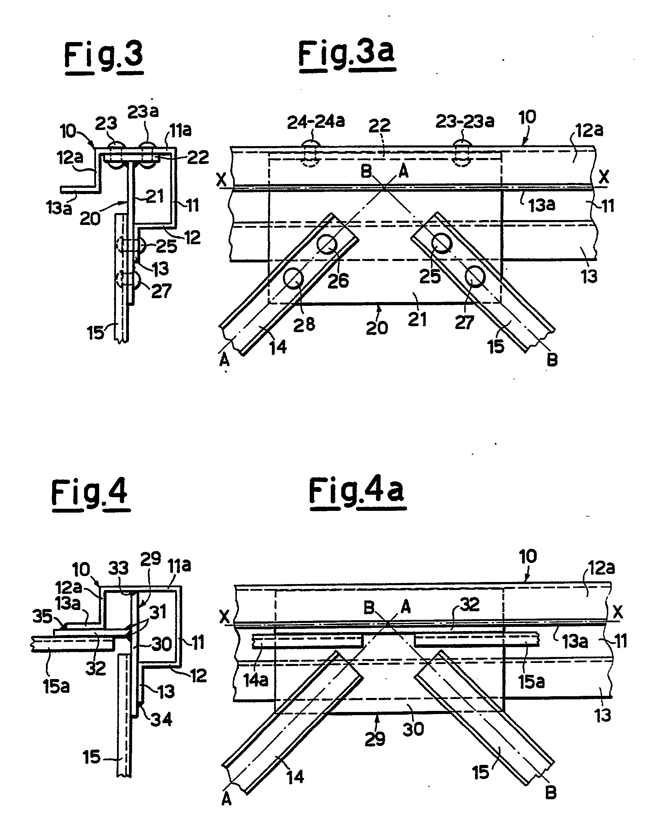

A form of embodiment analogue to that shown in fig. 2–2a is shown in fig. 3–3a and is different from the foregoing only because the plate 22 of the T-shaped jointing element 20 is fastened to the inner surface of the leg 11a of the angle iron 10 by means of two rows of rivets or bolts 23, 24 and 23a, 24a, with the rivets or bolts 23 and 24 and 23a and 24a being respectively positioned along two lines parallel to the barycentric axis X–X of the angle iron 10 and lying on parallel and equidistant planes, but on opposite sides, relatively to the centre-plane of the plate 21 of the T-shaped jointing element 20.

Figs. 4–4a show an example of structure providing the jointing to the angle iron 10 as of the former figures, of wall rods on two perpendicular planes, to provide a tridimensional network beam.

In this case, the jointing element 29, in a simpler form, can be constituted by a T-shaped element with a plate 30 butt-fastened, e.g., by means of welding beads 31, to a second plate 32. The plate 30 is butt-fastened, e.g., by means of a welding bead 33, to the inner surface of the leg 11a of the angle iron 10, abuts against the inner surface of the second extension length 13 of the other leg 11 of the angle iron 10 and is fastened to this length 13 by, e.g., a welding bead 34. On the contrary, the plate 32 abuts against the inner surface of the second extension length 13a of the leg 11a of the angle iron 10 and is fastened to this length 13a by, e.g., a welding bead 35. As it can be seen, in this case, to the plate 30 of the jointing element 29, two elements 14, 15, which lie on a plane parallel to the leg 11 of the angle iron 10, can be suitably fastened, e.g., by welding, whilst to the plate 32 of the jointing element 29 other two elements 14a, 15a, which lie on a plane perpendicular to the plane containing the elements 14 and 15 can be suitably fastened, e.g., by welding.

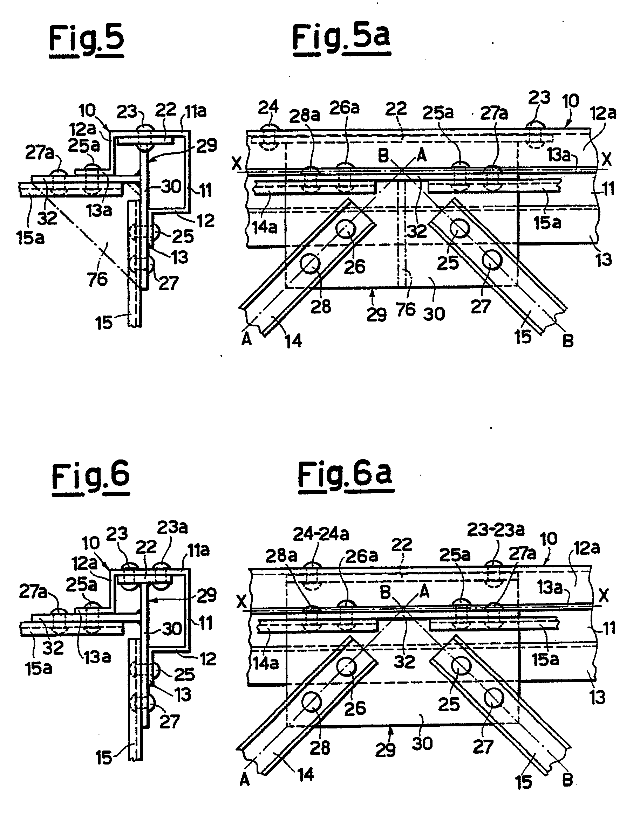

The examples of practical embodiment shown in Figs. 5–5a and 6–6a are analogue to those of Figs. 4–4a, with a jointing element 29 for the connection of elements or wall rods 14–15 and 14a–15a on two perpendicular planes, and these examples of practical embodiment resemble, as for the way of fastening the jointing element 29 to the inner surface of the leg 11a of the angle iron 10, to the forms of embodiment shown in figs. 2–2a and 3–3a respectively. The parts equal or having the same functions as in the former examples of practical embodiment are hence indicated with the same reference numerals. The reference numerals 25a–26a and 27a–28a are added to indicate the rivets or bolts for the fastening respectively of the plate 32 to the inner surface of the second extension length 13a of the leg 11a of the angle iron 10, and of the elements 14a, 15a to the plate 32 of the jointing element 29 (see Figs. 5–5a and Figs. 6–6a).

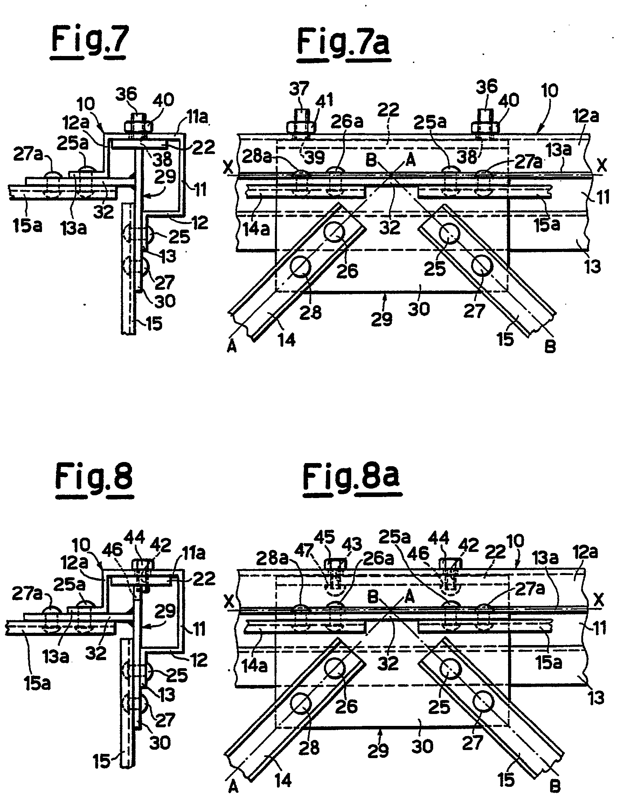

Figs. 7–7a show a further example of practical embodiment similar to that shown in Figs. 5–5a, with the only difference that the plate 22 of the jointing element 29, instead of being fastened to the leg 11a of the angle iron 10 by means of rivets or bolts 23, 24, is equipped with bolts 36, 37 suitable to be passed through suitable bores 38, 39 provided on the leg 11a of the angle iron 10, on said bolts 36, 37 fastening nuts 40, 41 being screwed down.

The same fastening way could be provided also in the examples of practical embodiment shown in Figs. 2–2a, 3–3a, and 6–6a.

A further possibility analogue to that of Figs. 7–7a is shown in Figs. 8–8a, wherein the plate 22 performs the function of nut, by being provided with threaded bores 42, 43, into which bolts 44, 45, passing through corresponding non-threaded holes provided on the leg 11a of the angle iron 10 are screwed down. Proper clearances 46, 47 are provided in this case in the plate 30, to allow the bolts 44, 45 to be completely screwed down in the threaded bores 42, 43 of the plate 22 of the jointing element 29.

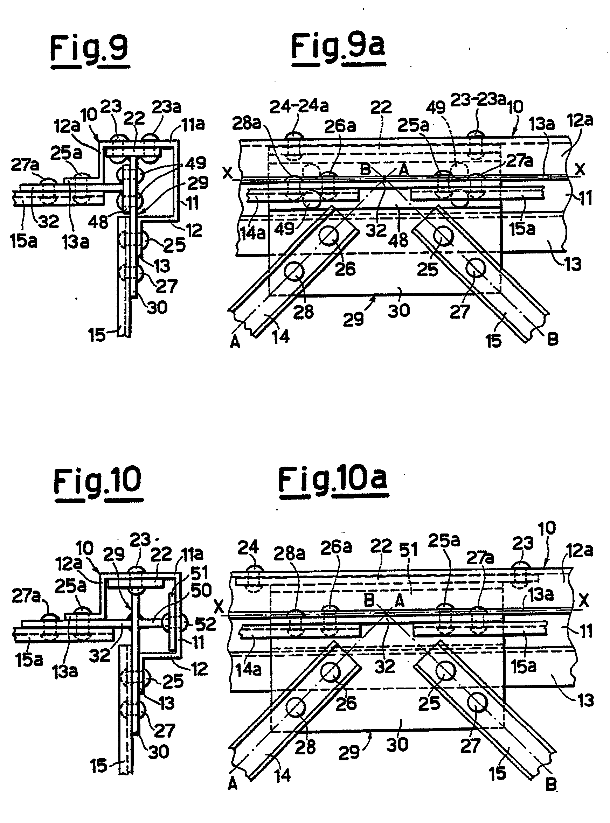

Figs. 9–9a show an example of practical embodiment similar to that of Figs. 6–6a, with the only difference that the two plates 30 and 32 of the jointing element 29, instead of being jointed by welding, are connected by riveting or bolting. In this case, the plate 32 is provided, by butt-fastening, with a perpendicular plate 48, which abuts against the plate 30 and is made solid with it by means of rivets or bolts 49.

Figs. 10–10a show an example of practical embodiment analogue to that of Figs. 5–5a, wherein the jointing element 29 is provided, as an extension of the plate 32, and on the opposite side of the plate 30, with a further plate 50, the end of which is butt-fastened to a perpendicular plate 51, abutting against the inner surface of the leg 11 of the angle iron 10, to which leg 11 the plate 51 is fastened by means of rivets or bolts 52 in a way analogue to that by which the plate 22 perpendicular to the plate 30 is fastened to the leg 11a of the angle iron 10.

The fastening of the plate 51 to the leg 11 of the angle iron 10 could be accomplished also by means of a double row of rivets or bolts, as shown in Figs. 6–6a for the fastening of the plate 22 to the leg 11a of the angle iron 10.

In the jointing element 29 shown in Figs. 10–10a, all the plates 30, 32, 22, 50 and 51 are connected with each other by means of suitable welds.

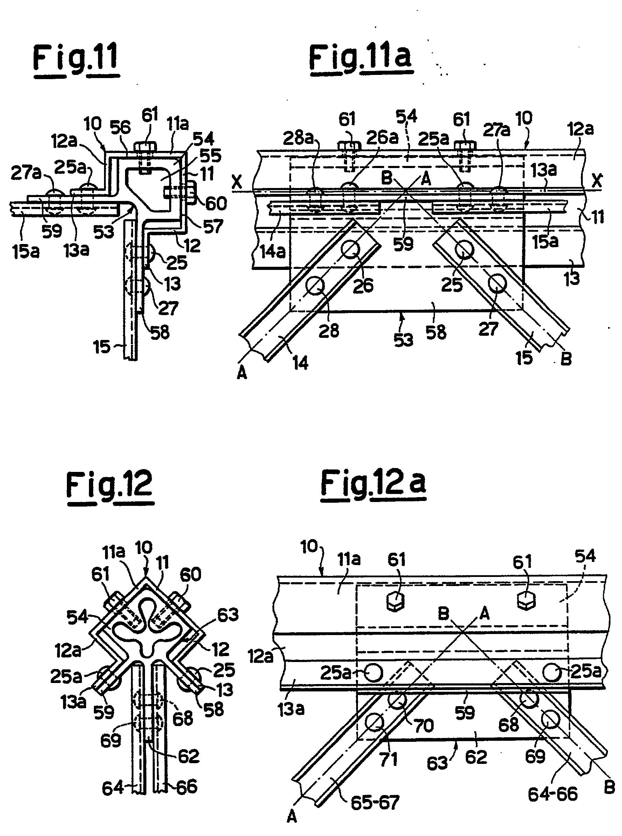

Figs. 11–11a show an example of practical embodiment in which a jointing element 53 is provided, which is constituted by a block 54, suitably provided with lightening cavities 55, and having two outer faces 56, 57 perpendicular to each other, destined to abut against the inner surfaces of the legs 11 and

11a of the angle iron 10. Formed as one single piece with this block 54 and protruding from it on perpendicular planes parallel to the outer faces 56, 57 of the same block, two plates 58, 59 are moreover provided, destined to abut respectively against the inner surfaces of the second extension lengths 13, 13a of the legs 11, 11a of the angle iron 10, to which lengths 13, 13a the plates 58, 59 are fastened by means of rivets or bolts 25, 26 and respectively 25a, 26a. To the plates 58, 59 the wall rods 14, 15 and 14a, 15a are in their turn fastened by means of the rivets or bolts 25, 26, 25a, 26a, as well as by means of rivets or bolts 27, 28, 27a, 28a, as already described with reference to Figs. 5–5a.

The block 54 is fastened in its turn to the legs 11, 11a of the angle iron 10 by means of bolts 60, 61 passing through suitable bores provided on said legs 11, 11a and screwed down in threaded bores provided in the same block.

The shaping of the block 54 can be different from that shown, in order to obtain a higher lightening, and to secure a regular force line flow, provided that the block has the two perpendicular faces 56, 57 destined to abut against the inner surfaces of the legs 11, 11a of the angle iron 10. The block 54 could however be also solid.

As shown in the example of practical embodiment of Figs. 12–12a, provision of a protruding plate 62 positioned on a centre-plane between the plates 58 and 59 is also possible on a block 54 of type analogue to that of Figs. 11–11a. If such a block 54 is mounted on and fastened to the angle iron 10 by means of bolts 60, 61 and rivets or bolts 25, 25a, as shown in Fig. 12, the plate 62 of the block 54 lies on a plane passing through the gravity centre of the angle iron 10 and inclined by 45° relatively to the legs 11, 11a of the same angle iron. A jointing element 63 of this kind allows connecting to the angle iron 10 of other elements, such as the elements 64, 65 and 66, 67, to be fastened by means of suitable rivets or bolts 68–69 and 70–71 to said plate 62.

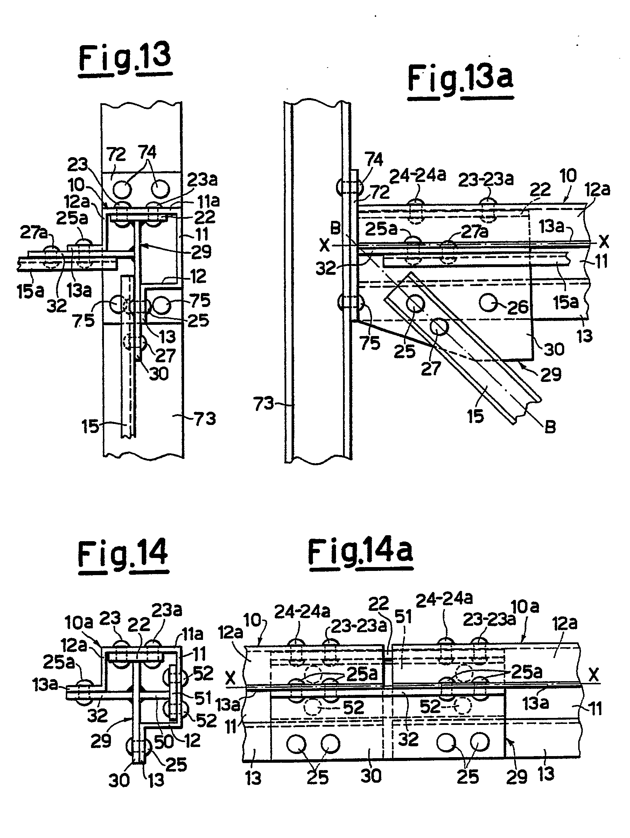

All the jointing elements illustrated up to now can lengthwise end with a plate 72, as shown in Figs. 13–13a for a jointing element 29 of the type shown in Figs 6–6a, to allow to the angle iron 10 a section bar whatsoever, e.g., an H-beam 73, to be connected, by rivets or bolts 74, 75, or by welds. This plate 72 is butt-welded to the plates 30, 32 and 22 of the jointing element 29 and frontally abuts against the end of the angle iron 10. The fastening of the jointing element 29 to the angle iron 10 can occur as already described with reference to Figs. 6–6a. Instead of the plate 72, another suitable element could be provided.

Figs. 14–14a show to exemplifying purposes the use of a jointing element 29 analogue to that shown in Figs. 10–10a, to the purpose of butt-connecting two angle irons 10 and 10a with each other. In this case, the plate 22 of the jointing element 29 is fastened by means of rivets or bolts 23, 24 and 23a, 24a to the inner surfaces of the legs 11a of the two near angle irons 10 and 10a, the plate 51 is fastened by rivets or bolts 52 to the inner surface of the legs 11, the plate 30 is fastened by rivets or bolts 25 to the inner surfaces of the second extension lengths 13 of the legs 11 of the two angle irons 10, 10a and the plate 32 is fastened by rivets or bolts 25a to the inner·surfaces of the second extension lenghts 13a of the legs 11a of the two angle irons 10, 10a.

It can be realized that as the element for jointing abutting lined-up angle irons 10, 10a, also a jointing element of such type as that illustrated in Figs. 11–11a could be used.

As shown by long chain lines in Figs 5–5a, nothing forbids weld stiffening ribs 76 on the plates 30 and 32 of the jointing element 29 (or also on the plates 58 and 59 of the jointing element 53 of Figs. 11–11a), without that however the principle of the invention be impaired.

All the jointing elements as disclosed can be obtained by welding plates, or by casting, forging, extrusion, on in any other way from metal materials, such as iron, steel, aluminium or their alloys.

It must be also pointed out that the various ways of fastening the jointing elements to the angle irons and the wall elements or rods to the jointing elements, shown to exemplifying purposes, can be swapped and/or combined with each other in various patterns.

In the structures as described up to now, an angle iron of the type wherein the first and second extension lenghts have each a width equal to half the width of a leg of the angle iron has always been used.

In this way, it can be observed that the plate 17 of the jointing element 16 of Figs 1–1a, the plate 21 of the jointing element 20 of Figs 2–2a and 3–3a, the plates 30 and 32 of the jointing element 29 of Figs 4–4a, 5–5a, 6–6a, 7–7a, 8–8a and 9–9a, the plates 30, 32 and 50 of the jointing element of Figs 10–10a, and the plates 58 and 59 of the jointing element 53 of Figs 11–11a and 12–12a, remain slightly off-centred relatively to the centre of gravity of the angle iron 10.

If one desires that the above said plates of the jointing elements are centred relatively to the centre of gravity of the angle iron, without however that such a centre of gravity changes in its position, then the widths of the first and second extension lengths of the equal legs of the angle iron must be varied.

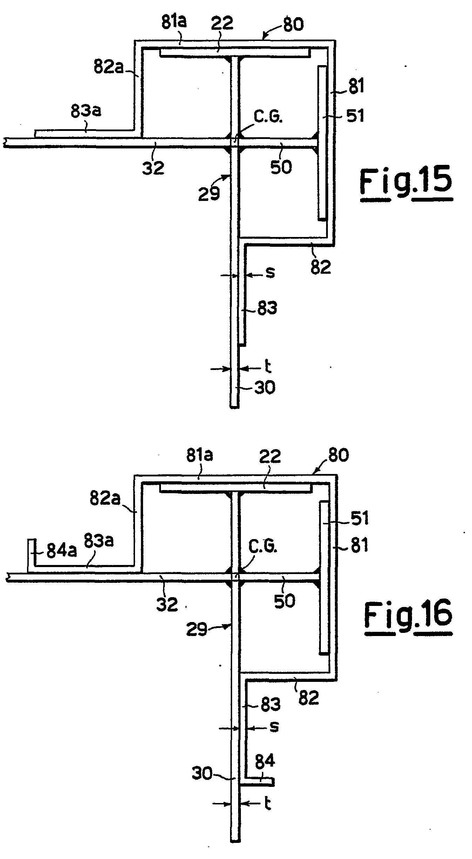

This modification is described hereunder, referring to Figs. 15 and 16.

The angle iron 80 shown in Fig. 15 has too two equal legs 81 and 81a, which legs are each extended, at their free ends, with a first extension length 82 and respectively 82a positioned at right angle relative to its related leg 81 and respectively 81a in the same direction as of the other leg 81a and respectively 81, and with a second extension length 83 and respectively 83a positioned at right angle relative to the first extension length 82 and respectively 82a in such a direction as to depart from the other leg 81a and respectively 81. However, these first and second extension lengths 82, 82a and 83, 83a do not have each a width exactly equal to half width of one leg 81 or 81a of the angle iron 80, but the first extension lengths are slightly less wide and the second extension lengths are correspondingly wider. The lessening and respectively the increase in width of the said extension lengths depend, on one hand, on the wall thickness of these lengths and hence of the whole angle iron (because its legs and extension lengths have the same thickness), and, on the other hand, on the wall thickness of the plates of the jointing element destined to be fastened to the inner surfaces of the second extension lengths of the same angle iron.

In particular, the first extension lengths 82, 82a of the legs 81, 81a of the angle iron 80 have each a width equal to half the width of a leg 81 or 81a of the angle iron, lessened by a value corresponding to the sum formed by the half thickness $s$ of the second extension lengths 83, 83a of the legs of the angle iron and by the half thickness $t$ of the plates 30, 32 of the jointing element 29 destined to be fastened to the inner surfaces of said second extension lengths 83 and respectively 83a. (In the example of practical embodiment shown in Fig. 15, to the angle iron 80 a jointing element 29 of the type as described above with reference to Figs. 10–10a is fastened).

In this way, it can be achieved that the plates 30 and 32 of the jointing element 29 are centred relatively to the centre of gravity, indicated with "C.G." in Fig. 15.

But, to the purpose of obtaining that, also with the reduction in width of the first extension lengths 82, 82a, the centre of gravity C.G. of the angle iron maintains its position unchanged relatively to an angle iron wherein the first and the second extension lengths of the two legs have each a width exactly equal to the half width of a leg of the angle iron, increasing the width of the second extension lengths 83, 83a is necessary, in such a way that said second extension lengths have each a width equal to the half width of a leg 81 or 81a, increased by a value corresponding to the said sum $s/2 + t/2$.

As it can be observed in Fig. 15, thanks to this slight modification, it can be achieved that the plates 30, 32 of the jointing element 29 fastened to the inner surfaces of the second extension lengths 83, 83a pass with their centre planes exactly through the centre of gravity C.G. of the angle iron 80, while this centre of gravity maintains its position unchanged as compared to an angle iron of the type of Fig. 19 shown in the former figures.

A form of embodiment of the angle iron having equal legs, similar to that shown in Fig. 15 is shown in Fig. 16 too. This latter form of embodiment, for which the same reference numerals as of Fig. 15 have been used, is different from this latter only in that the second extension lengths 83, 83a have in correspondence of their free ends short lengths 84, 84a bent rearwards at a right angle.

In this case, both the width of the seond extension lengths of the legs of the angle iron, and that of said lengths bent rearwards must be calculated in such a way as to keep unchanged the centre of gravity C.G. of the same angle iron. The advantage of such an angle iron consists in that it has its edges stiffened and shows hence a higher strength to flexural stresses.

It is to be intended that all the several types of jointing elements hereinabove described with reference to the above Figures to exemplifying purposes can be used in combination with an angle iron 80 as shown in Figs. 15 or 16.

Also the angle iron 80, as the angle iron 10, can be obtained by cold-bending, hot-rolling or extrusion, of steel or of aluminium or of their alloys.

The invention has been disclosed on the basis of some examples of practical embodiment, but it is intended that numerous other executive variants can be accomplished within the scope of the invention as defined in the appended claims.

## Claims

1. Structure for metal constructions in general, in particular for trestlework constructions, accomplished by means of section bars and jointing elements (16; 20; 29; 53; 63), comprising at least one angle iron (10; 80) having equal legs (11, 11a; 81, 81a), each of which legs (11, 11a; 81, 81a) is extended at its free end with a first extension length (12, 12a; 82, 82a) positioned at right angle relative to the related leg (11, 11a; 81, 81a) in the same direction as the other leg (11a, 11; 81a, 81), and with a second extension length (13, 13a; 83, 83a) positioned at right angle relative to the first extension length (12, 12a; 82, 82a) in such a direction as to depart from the other leg (11a, 11; 81a, 81), with said first and second extension lengths (12, 12a; 82, 82a; 13, 13a; 83, 83a) having each one a width substantially equal to half the width of a leg (11, 11a; 81, 81a) of the angle iron (10; 80), characterized in that said jointing element (16; 20; 29; 53; 63) is constituted by at least one plate (17; 21; 30; 58) suitable to be fastened to said angle iron (10; 80) at the inner surface of one of its legs (11a; 81a) and at the inner surface of the second extension length (13; 83) of the other leg (11; 81).

2. Structure according to claim 1, characterized in that said angle iron (80) having equal legs (81, 81a) has its first extension lengths (82, 82a) having each a width equal to half the width of a leg (81, 81a) of the angle iron lessened by a value corresponding to the sum formed by half the thickness (s) of the second extension lengths (83, 83a) of the legs (81, 81a) of the angle iron (80) and by half the thickness (t) of said plate (17; 21; 30; 58) of the jointing element (16; 20; 29; 53; 63) destined to be fastened to the inner surface of said second extension length (83) of the other leg (81) of said angle iron (80).

3. Structure according to claim 2, characterized in that the second extension lengths (83, 83a) of the legs (81, 81a) of the angle iron (80) have each a width equal to half the width of a leg (81, 81a) of said angle iron (80) increased by the value of said sum.

4. Structure according to claim 2, characterized in that the second extension lengths (83, 83a), of the legs (81, 81a) of the angle iron (80) have each at their free end a length (84, 84a) bent rearwards at right angle.

5. Structure according to claim 1 or 2 to 4, characterized in that said jointing element (16) is constituted by one plate (17) only, suitable to be butt-fastened to the inner surface of one leg (11a) of said angle iron (10) and suitable to be fastened, under plane contact, to the inner surface of the second extension length (13) of the other leg (11) of said angle iron (10).

6. Structure according to claim 5, characterized in that said one plate (21) of said jointing element (20) ends, at one of its ends, with a second perpendicular plate (22), to which it is butt-jointed, forming a T-shaped element, said second plate (22) being suitable to be fastened, under plane contact, to the inner surface of the said one leg (11a) of said angle iron (10).

7. Structure according to claim 1 or 2 to 4, characterized in that said jointing element (29) has a second plate (32) perpendicular to said one plate (30), and destined to be fastened to the inner surface of the second extension length (13a) of said one leg (11a) of said angle iron (10).

8. Structure according to claim 7, characterized in that said second plate (32, 50) extends on both sides of said one plate (30) and is destined to be fastened, on one side, by butt-fastening, to the inner surface of said other leg (11; 81) of said angle iron (10; 80) and, on the other side, to the inner surface of the second extension length (13a; 83a) of said one leg (11a; 81a) of said angle iron (10; 80).

9. Structure according to claim 8, characterized in that said second plate (32, 50) is butt-fastened, at one of its ends, to a further perpendicular plate (51), destined to be fastened, under plane contact, to the inner surface of said other leg (11; 81) of said angle iron (10; 80).

10. Structure according to claim 7, characterized in that said two perpendicular plates (58, 59) of said jointing element (53; 63) protrude from two faces of a block (54) having at least two outer faces (56, 57) parallel to the planes of said two plates (58, 59), and destined to be fastened to the inner surfaces of the two legs (11, 11a) of said angle iron (10).

11. Structure according to claim 10, characterized in that said block (54) has lightening cavities (55).

12. Structure according to claim 10, characterized in that said block (54) bears solid with itself a further plate (62) positioned on a centre-plane between said two perpendicular plates (58, 59).

13. Structure according to claim 7, characterized in that said two plates (30, 32) of said jointing element (29) are jointed by means of welding beads.

14. Structure according to claim 7, characterized in that said second plate (32) bears solid with itself, by being butt-fastened to it, a perpendicular plate (48) suitable to be fastened, under plane contact, to a surface of said one plate (30) of said jointing element (29).

15. Structure according to claims 10-12, characterized in that said block (54) with its related plates (58, 59, 62) is obtained by casting.

16. Structure according to claim 7, characterized in that between said two plates (30, 32) of said jointing element (29) a stiffening rib (76) is provided.

17. Structure according to claim 1 or 2 to 4, characterized in that said jointing element (29) ends lengthwise with an element (72) for the connection to the angle iron (10) of a section bar (73), said end element (72) being destined to abut against an end of said angle iron (10).

18. Structure according to claims 5 to 10, characterized in that the plates (17, 21, 22; 30, 32; 50, 51, 58, 59) of said jointing element (16; 20; 29; 53; 63) are fastened to said angle iron (10) by welding.

19. Structure according to claims 5 to 10, characterized in that the plates (17; 21, 22; 30, 32; 50, 51, 58, 59) of said jointing element (16; 20; 29; 53; 63) are fastened to said angle iron (10) by riveting or bolting.

## Patentansprüche

1. Anordnung für Stahlbau im allgemeinen, insbesondere für Fachwerkbau, hergestellt mittels Profileisen und Verbindungselementen (16; 20; 29; 53; 63), umfassend wenigstens ein Winkeleisen (10; 80) mit gleich breiten Schenkeln (11, 11a; 81, 81a), wobei an das freie Ende eines jeden Schenkels (11, 11a; 81, 81a) unter einem rechten Winkel ein erster Fortsatz (12, 12a; 82, 82a) in gleicher Richtung wie der andere Schenkel (11a, 11; 81a, 81) anschließt und an den ersten Fortsatz (12, 12a; 82, 82a) unter einem rechten Winkel ein zweiter Fortsatz (13, 13a; 83, 83a) in einer solchen Richtung anschließt, daß er sich vom anderen Schenkel (11a, 11; 81a, 81) weg erstreckt und wobei die ersten und zweiten Fortsätze (12, 12a; 82, 82a; 13, 13a; 83, 83a) je eine im wesentlichen der halben Breite eines Schenkels (11, 11a; 81, 81a) des Winkeleisens (10; 80) entsprechende Breite haben, dadurch gekennzeichnet, daß das Verbindungselement (16; 20; 29; 53; 63) von wenigstens einer Platte (17; 21; 30; 58) gebildet ist, die zum Verbinden mit dem Winkeleisen (10; 80) an der Innenseite eines seiner Schenkel (11a; 81a) und an der Innenseite des zweiten Fortsatzes (13; 83) des anderen Schenkels (11; 81) geeignet ist.

2. Anordnung nach Anspruch 1, dadurch gekennzeichnet, daß jeder der ersten Fortsätze (82, 82a) des gleich breite Schenkel (81, 81a) aufweisenden Winkeleisens (80) eine Breite hat, die gleich ist der halben Breite eines Schenkels (81, 81a) des Winkeleisens vermindert um einen Betrag entsprechend der Summe aus der halben Dicke (s) der zweiten Fortsätze (83, 83a) der Schenkel (81, 81a) des Winkeleisens (80) und der halben Dicke (t) der Platte (17; 21; 30; 58) des Verbindungselementes (16; 20; 29; 53; 63), welche zum Anbringen an der Innenseite des zweiten Fortsatzes (83) des anderen Schenkels (81) des Winkeleisens (80) bestimmt ist.

3. Anordnung nach Anspruch 2, dadurch gekennzeichnet, daß die zweiten Fortsätze (83, 83a) der Schenkel (81, 81a) des Winkeleisens (80) eine Breite haben, die gleich ist der halben Breite eines Schenkels (81, 81a) des Winkeleisens vermehrt um den Betrag der genannten Summe.

4. Anordnung nach Anspruch 2, dadurch gekennzeichnet, daß am freien Ende der zweiten Fortsätze (83, 83a) der Schenkel (81, 81a) des Winkeleisens (80) ein Abschnitt (84, 84a) rückwärts abgekantet ist.

5. Anordnung nach einem der Ansprüche 1 oder 2 bis 4, dadurch gekennzeichnet, daß das Verbindungselement (16) von einer einzigen Platte (17) gebildet ist, die zum stumpfen Befestigen an der Innenseite eines Schenkels (11a) des Winkeleisens (10) und zum flächig anliegenden Befestigen an der Innenseite des zweiten Fortsatzes (13) des anderen Schenkels (11) des Winkeleisens geeignet ist.

6. Anordnung nach Anspruch 5, dadurch gekennzeichnet, daß diese eine Platte (21) des Verbindungselementes (20) an einem ihrer Ränder in einer zweiten, zu ihr normalen Platte (22) endet und mit dieser zur Bildung eines T-förmigen Elementes stumpf verbunden ist, wobei die zweite Platte (22) zum flächig anliegenden Befestigen an der Innenseite des einen Schenkels (11a) des Winkeleisens (10) geeignet ist.

7. Anordnung nach einem der Ansprüche 1 oder 2 bis 4, dadurch gekennzeichnet, daß das Verbindungselement (29) eine zu der einen Platte (30) normale zweite Platte (32) aufweist, die zum Befestigen an der Innenseite des zweiten Fortsatzes (13a) des einen Schenkels (11a) des Winkeleisens (10) bestimmt ist.

8. Anordnung nach Anspruch 7, dadurch gekennzeichnet, daß sich die zweite Platte (32, 50) zu beiden Seiten der einen Platte (30) erstreckt und an einem Ende zum stumpfen Befestigen an der Innenseite des anderen Schenkels (11; 81) des Winkeleisens (10; 80) und am anderen Ende zum Befestigen an der Innenseite des zweiten Fortsatzes (13a; 83a) des einen Schenkels (11a; 81a) des Winkeleisens (10; 80) bestimmt ist.

9. Anordnung nach Anspruch 8, dadurch gekennzeichnet, daß die zweite Platte (32, 50) mit einem Ende stumpf an einer weiteren normalen Platte (51) befestigt ist, die zum flächig anliegenden Befestigen an der Innenseite des anderen Schenkels (11; 81) des Winkeleisens (10; 80) bestimmt ist.

10. Anordnung nach Anspruch 7, dadurch gekennzeichnet, daß die zwei zueinander normalen Platten (58, 59) des Verbindungselementes (53; 63) von zwei Flächen eines Blocks (54) abstehen, der wenigstens zwei zu den Ebenen der beiden Platten (58, 59) parallele Außenflächen (56, 57) hat, die zum Befestigen an den Innenseiten der beiden Schenkel (11, 11a) des Winkeleisens (10) bestimmt sind.

11. Anordnung nach Anspruch 10, dadurch gekennzeichnet, daß der Block (54) Hohlräume (55) zur Massenverringerung aufweist.

12. Anordnung nach Anspruch 10, dadurch gekennzeichnet, daß der Block (54) eine weitere einstückig mit ihm ausgebildete Platte (62) trägt, die in einer Mittelebene zwischen den beiden zueinander normalen Platten (58, 59) liegt.

13. Anordnung nach Anspruch 7, dadurch gekennzeichnet, daß die beiden Platten (30, 32) des Verbindungselementes (29) durch Schweißraupen miteinander verbunden sind.

14. Anordnung nach Anspruch 7, dadurch gekennzeichnet, daß die zweite Platte (32) eine rechtwinkelig stumpf aneinandergefügte Platte (48) trägt, die zum flächig anliegenden Befestigen an einer Fläche der einen Platte (30) des Verbindungselementes (29) geeignet ist.

15. Anordnung nach einem der Ansprüche 10 bis 12, dadurch gekennzeichnet, daß der Block (54) mit seinen zugeordneten Platten (58, 59, 62) durch Gießen hergestellt ist.

16. Anordnung nach Anspruch 7, dadurch gekennzeichnet, daß zwischen den beiden Platten (30, 32) des Verbindungselementes (29) eine Versteifungsrippe (76) vorgesehen ist.

17. Anordnung nach einem der Ansprüche 1 oder 2 bis 4, dadurch gekennzeichnet, daß das Verbindungselement (29) in Längsrichtung mit einem Element (72) zum Anschließen an das Winkeleisen (10) eines Profileisens (73) endet, wobei das Endelement (72) zum Anstoßen an ein Ende des Winkeleisens (10) bestimmt ist.

18. Anordnung nach einem der Ansprüche 5 bis 10, dadurch gekennzeichnet, daß die Platten (17, 21, 22; 30, 32; 50, 51, 58, 59) des Verbindungselementes (16; 20; 29; 53; 63) mit dem Winkeleisen (10) durch Verschweißen verbunden sind.

19. Anordnung nach einem der Ansprüche 5 bis 10, dadurch gekennzeichnet, daß die Platten (17, 21, 22; 30, 32; 50, 51, 58, 59) des Verbindungselementes (16; 20; 29; 53; 63) mit dem Winkeleisen (10) durch Vernieten oder Verschrauben verbunden sind.

## Revendications

1. Structure destinée en général à des constructione métalliques, en particulier à des constructions en treillis, réalisées au moyen de profilés d'acier et d'éléments d'assemblage (16; 20; 29; 53; 63), comprenant au moins une équerre (10; 80) présentant des pattes égales (11, 11a; 81, 81a), chacune de ces pattes (11, 11a; 81, 81a) étant prolongée sur son extrémité libre par une première longueur de prolongement (12, 12a; 82, 82a) positionnée à angle droit par rapport à la patte concernée (11, 11a; 81, 81a) dans la même direction que l'autre patte (11, 11a; 81, 81a), et une deuxième longueur de prolongement (13, 13a; 83, 83a) positionnée à angle droit par rapport à la première longueur de prolongement (12, 12a; 82, 82a) dans une direction appropriée pour s'écarter de l'autre patte (11a, 11; 81a, 81), lesdites première et deuxième longueurs de prolongement (12, 12a; 82, 82a; 13, 13a; 83, 83a) étant chacune d'une largeur sensiblement égale à la moitié de la largeur d'une patte (11, 11a; 81, 81a) de l'équerre (10; 80), caractérisée en ce que ledit élément d'assemblage (16; 20; 29; 53; 63) est constitué par au moins une plaque (17; 21; 30; 58) apte à être fixée à ladite équerre (10; 80) sur la surface intérieure de l'une de ces pattes (11a; 81a) et à la surface intérieure de ladite deuxième longueur de prolongement (13; 83) de l'autre patte (11; 81).

2. Structure selon la revendication 1, caractérisée en ce que lesdites premières longueurs de prolongement (82, 82a) de ladite équerre (80) à pattes égales (81, 81a) sont d'une largeur égale à la moitié de la largeur d'une patte (81, 81a) de l'équerre, diminuée d'une valeur correspondant à la somme formée par la moitié de l'épaisseur (s) des deuxièmes longueurs de prolongement (83, 83a) des pattes (81, 81a) de l'équerre (80) et de la moitié de l'épaisseur (t) de ladite plaque (17; 21; 30; 58) de l'élément d'assemblage (16; 20; 29; 53; 63) destiné à être fixé sur la surface intérieure de ladite deuxième longueur de prolongement (83) de l'autre patte (81) de ladite équerre (80).

3. Structure selon la revendication 2, caractérisée en ce que les deuxièmes longueurs de prolongement (83, 83a) des pattes (81, 81a) de l'équerre (80) sont chacune d'une largeur égale à la moitié de la largeur d'une patte (81, 81a) de ladite équerre (80) augmentée de la valeur de ladite somme.

4. Structure selon la revendication 2, caractérisée en ce que les deuxièmes longueurs de prolongement (83, 83a) des pattes (81, 81a) de l'équerre (80) présentent chacune à leur extrémité libre une longueur (84, 84a) recourbée vers l'arrière à angle droit.

5. Structure selon la revendication 1 ou 2 à 4, caractérisée en ce que ledit élément d'assemblage (16) est constitué d'une plaque (17) seulement, apte à être fixée en bout sur la surface intérieure d'une patte (11a) de ladite équerre (10) et apte à être fixée, en contact plan, sur la surface intérieure de la deuxième longueur de prolongement (13) de l'autre patte (11) de ladite équerre (10).

6. Structure selon la revendication 5, caractérisée en ce que ladite première plaque (21) dudit élément d'assemblage (20) se termine, à l'une de ses extrémités, par une deuxième plaque perpendiculaire (22), sur laquelle elle est assemblée en bout, en formant un élément en forme de T, ladite deuxième plaque (22) étant apte à être fixée, en contact plan, sur la surface intérieure de ladite première patte (11a) de ladite équerre (10).

7. Structure selon la revendication 1 ou 2 à 4, caractérisée en ce que ledit élément d'assemblage (29) comporte une deuxième plaque (32) perpendiculaire à ladite première plaque (30) et destinée à être fixée à la surface intérieure de la deuxième longueur de prolongement (13a) de ladite première patte (11a) de ladite équerre (10).

8. Structure selon la revendication 7, caractérisée en ce que ladite deuxième plaque (32, 50) s'étend sur les deux côtés de ladite première plaque (30) et est destinée à être fixée, sur un côté, par fixation en bout, sur la surface intérieure de ladite autre patte (11; 81) de ladite équerre (10, 80) et, sur l'autre côté, sur la surface intérieure de ladite longueur de prolongement (13a; 83a) de ladite première patte (11a; 81a) de ladite équerre (10; 80).

9. Structure selon la revendication 8, caractérisée en ce que ladite deuxième plaque (32, 50) est fixée en bout, à l'un de ses extrémités, sur une autre plaque perpendiculaire (51), destinée à être fixée, en contact plan, sur la surface intérieure de ladite autre patte (11; 81) de ladite équerre (10; 80).

10. Stucture selon la revendication 7, caractérisée en ce que deux plaques perpendiculaires (58, 59) dudit élément d'assemblage (53; 63) font saillie depuis deux faces d'un bloc (54) présentant au moins deux faces extérieures (56, 57) parallèles aux plans desdites deux plaques (58, 59), et destinées à être fixées sur les surfaces intérieures des deux pattes (11, 11a) de ladite équerre (10).

11. Structure selon la revendication 10, caractérisée en ce que ledit bloc (54) comporte des cavités d'allégement (55).

12. Structure selon la revendication 10, caractérisée en ce que ledit bloc (54) porte d'un seul tenant avec lui-même une autre plaque (62) positionnée sur un plan central entre lesdites deux plaques perpendiculaires (58, 59).

13. Structure selon la revendication 7, caractérisée en ce que lesdites deux plaques (30, 32) dudit élément d'assemblage (29) sont assemblées au moyen de cordons de soudure.

14. Structure selon la revendication 7, caractérisée en ce que ladite deuxième plaque (32) porte d'un seul tenant avec elle-même, en étant fixée en bout sur elle, une plaque perpendiculaire (48) apte à être fixée, en contact plan, sur une surface de ladite première plaque (30) dudit élément d'assemblage (29).

15. Structure selon les revendications 10 à 12, caractérisée en ce que ledit bloc (54), ainsi que les plaques qui lui sont reliées (58, 59, 62), est obtenu par coulée.

16. Structure selon la revendication 7, caractérisée en ce qu'une nervure de raidissement (76) est disposée entre lesdites deux plaques (30, 32) dudit élément d'assemblage (29).

17. Structure selon la revendication 1 ou 2 à 4, caractérisée en ce que ledit élément d'assemblage (29) se termine en longueur par un élément (72) destiné à la liaison avec l'équerre (10) d'un profilé d'acier (73), ledit élément d'extrémité (72) étant destiné à venir en butée contre une extrémité de ladite équerre (10).

18. Structure selon les revendications 5 à 10, caractérisée en ce que les plaques (17, 21, 22; 30, 32; 50, 51, 58, 59) dudit élément d'assemblage (16; 20; 29; 53; 63) sont fixées à ladite équerre (10) par soudure.

19. Structure selon les revendications 5 à 10, caractérisée en ce que les plaques (17, 21, 22; 30, 32; 50, 51, 58, 59) dudit élément d'assemblage (16; 20; 29; 53; 63) sont fixées sur ladite équerre (10) par rivetage ou par boulonnage.

Fig.1

Fig.1a

Fig.2

Fig.2a

Fig.3

Fig.3a

Fig.4

Fig.4a

Fig.5

Fig.5a

Fig.6

Fig.6a

Fig.7   Fig.7a

Fig.8   Fig.8a

# Fig.9

# Fig.9a

# Fig.10

# Fig.10a

Fig.11

Fig.11a

Fig.12

Fig.12 a

## Fig.13

## Fig.13a

## Fig.14

## Fig.14a

## Fig.15

## Fig.16